# EUROPÄISCHE PATENTANMELDUNG

(11) **EP 1 302 784 A2**
(43) Veröffentlichungstag der Anmeldung: **16.04.2003**
(21) Anmeldenummer: 02022474.7
(22) Anmeldetag: 04.10.2002
(51) Int. Cl.: G01S 17/95

(54) **Sichtweitenbestimmung**

(30) Priorität: 09.10.2001 DE 10149768
(71) Anmelder: IBEO Automobile Sensor GmbH, 22179 Hamburg (DE)
(72) Erfinder: Lages, Ulrich, Dr., 21031 Hamburg (DE); Willhoeft, Volker, 22303 Hamburg (DE)
(74) Vertreter: Manitz, Finsterwald & Partner GbR

(57) **Zusammenfassung**

Die Erfindung betrifft ein Verfahren zum Bestimmen der Sichtweite einer bevorzugt optoelektronischen, insbesondere an einem Fahrzeug angebrachten Erfassungseinrichtung, insbesondere eines Laserscanners, die zumindest einen Sensor zur Aussendung von insbesondere gepulster elektromagnetischer Strahlung in einen Überwachungsbereich und zum Empfang von aus dem Überwachungsbereich reflektierter Strahlung sowie eine Auswerteeinrichtung zur Auswertung der reflektierten Strahlung umfasst, bei dem während des Betriebs des Sensors das Vorliegen wenigstens einer im Sichtbereich des Sensors liegenden, die Sichtweite zumindest bereichsweise beeinträchtigenden Störung anhand wenigstens einer charakteristischen Störungseigenschaft erkannt wird, die mittels des Sensors durch Auswerten der reflektierten Strahlung identifizierbar ist, aus reflektierter Strahlung, die zumindest die aus dem Störbereich stammende Störstrahlung umfasst, die Stärke der Störung ermittelt wird, und aus der Störungsstärke die momentane Sichtweite des Sensors bestimmt wird.

## Beschreibung

Die Erfindung betrifft ein Verfahren zum Bestimmen der Sichtweite einer Erfassungseinrichtung, die zumindest einen Sensor zur Aussendung von insbesondere gepulster elektromagnetischer Strahlung in einen Überwachungsbereich und zum Empfang von aus dem Überwachungsbereich reflektierter Strahlung sowie eine Auswerteeinrichtung zur Auswertung der reflektierten Strahlung umfasst.

Derartige Erfassungseinrichtungen sind grundsätzlich bekannt und werden beispielsweise an Fahrzeugen angebracht, um während des Fahrbetriebs die Fahrzeugumgebung insbesondere zur Objekterkennung und -verfolgung zu erfassen.

Problematisch sind während des Betriebs auftretende Störungen z.B. aufgrund von Umwelteinflüssen wie Regen oder von Verschmutzungen des Sensors wie beispielsweise durch Staub, welche die normale Sichtweite des Sensors, die auch als Reichweite bezeichnet wird, beeinträchtigen können. In Fahrzeuganwendungen sind insbesondere bei hohen Fahrzeuggeschwindigkeiten möglichst hohe Sicht- bzw. Reichweiten erwünscht, damit vorausfahrende Fahrzeuge oder Gegenstände auf der Fahrbahn so früh wie möglich erkannt werden.

Kommt es aufgrund von Störungen zu einer Reduzierung der Sichtweite des Sensors, so ist es wünschenswert, diese Einschränkung der Leistungsfähigkeit des Sensors zu erkennen, um geeignete Maßnahmen ergreifen zu können, z.B. die Geschwindigkeit des eigenen Fahrzeugs zu verringern.

Aufgabe der Erfindung ist es, ein Verfahren der eingangs genannten Art sowie eine Vorrichtung zu schaffen, die es gestatten, auf möglichst einfache Weise eine Sichtweitenreduzierung zu erkennen, und die es insbesondere ermöglichen, quantitative Aussagen über die Auswirkung der Störung auf die Sichtweite zu treffen.

Die Lösung dieser Aufgabe erfolgt durch die Merkmale des Anspruchs 1 und insbesondere dadurch, dass während des Betriebs des Sensors das Vorliegen wenigstens einer im Sichtbereich des Sensors liegenden, die Sichtweite zumindest bereichsweise beeinträchtigenden Störung anhand wenigstens einer charakteristischen Störungseigenschaft erkannt wird, die mittels des Sensors durch Auswerten der reflektierten Strahlung identifizierbar ist, aus reflektierter Strahlung, die zumindest die aus dem Störbereich stammende Störstrahlung umfasst, die Stärke der Störung ermittelt wird, und aus der Störungsstärke die momentane Sichtweite des Sensors bestimmt wird.

Bei dem Sensor handelt es sich vorzugsweise um einen Laserscanner, der in wenigstens einer einen Winkelbereich von bis zu 360° umfassenden Abtastebene einen Laserstrahl aussendet und für jede Richtung, in welcher der Laserstrahl innerhalb der Abtastebene ausgesandt wird, mittels eines Pulslaufzeitmeßverfahrens einen Entfernungswert sowie einen Winkelwert bezogen auf eine Sensorachse liefert.

Erfindungsgemäß ist die Erfassungseinrichtung selbst in der Lage, das Vorliegen einer die Sensorsichtweite beeinträchtigenden Störung zu erkennen. Dies schließt allerdings nicht aus, dass die Störungserkennung durch zusätzliche Einrichtungen wie z.B. durch einen an einem Fahrzeug angebrachten Regensensor unterstützt wird.

Bei Störungen im Sinne der Erfindung handelt es sich nicht um interessierende Gegenstände, die mit dem Sensor erkannt werden sollen - in Fahrzeuganwendungen z.B. um andere Fahrzeuge, um Personen oder Gegenstände auf oder an der Fahrbahn oder um Fahrbahnbegrenzungen - sondern um Erscheinungen, welche die Erfassung der interessierenden Gegenstände mittels des Sensors zumindest potentiell beeinträchtigen und damit den eigentlichen Betrieb des Sensors stören.

Zur Störungserkennung dient der Sensor, der in der Lage ist, zumindest eine charakteristische Eigenschaft einer die Sichtweite beeinträchtigenden Störung zu identifizieren, indem die aus dem Überwachungsbereich reflektierte und zumindest aus dem Bereich der Störung stammende Strahlung mittels der Auswerteeinrichtung auf das Vorliegen der wenigstens einen Störungseigenschaft hin untersucht wird.

Gemäß der Erfindung kann nicht nur erkannt werden, dass eine Störung vorliegt, sondern es wird außerdem bestimmt, in welchem Ausmaß die Sichtweite des Sensors durch die Störung beeinträchtigt wird. Beispielsweise wird also nicht nur festgestellt, dass es regnet, sondern außerdem, wie stark der Regen ist, wodurch ein Maß zur Verfügung steht, aus dem die momentane, durch den Regen reduzierte Sensorreichweite abgeleitet werden kann. Hierzu wird erfindungsgemäß zunächst durch Auswerten zumindest der aus dem Störbereich z.B. an Regentropfen reflektierten Strahlung ein Maß für die Stärke der Störung bestimmt und anschließend aus der Störungsstärke die momentane Sichtweite des Sensors ermittelt.

So kann beispielsweise ein Maß für die Stärke von Regen aus der gemessenen Anzahl der Regentropfen abgeleitet werden, wobei aus der Regenstärke wiederum die momentane Sichtweitenreduzierung bestimmt oder abgeschätzt wird. Diese Bestimmung bzw. Abschätzung kann unabhängig von der Größe der Regentropfen erfolgen. Alternativ oder zusätzlich kann zumindest prinzipiell die Bestimmung der Regenstärke und damit der momentanen Sichtweite auch auf der Grundlage der gemessenen Größe der Regentropfen erfolgen, sofern der Sensor und die Auswerteeinrichtung zu einer Unterscheidung zwischen verschiedenen Tropfengrößen in der Lage sind. Entsprechendes gilt für andere Störungen wie z.B. Schnee, die wie Regen aus stochastisch auftretenden einzelnen Teilchen bestehen. Je nach Leistungsfähigkeit des Sensors und der Auswerteeinrichtung kann eine Unterscheidung zwischen verschiedenen Teilchengrößen - sofern eine solche Unterscheidung in der jeweiligen Anwendung überhaupt realisiert wird - entweder jeweils innerhalb eines Störungstyps, indem z.B. zwischen unterschiedlich großen Regentropfen unterschieden wird, oder lediglich zwischen verschiedenen Störungstypen erfolgen, indem z.B. aufgrund der gemessenen Teilchengröße lediglich zwischen Regen und Schnee, nicht aber zwischen Regen mit kleinen Tropfen und Regen mit großen Tropfen unterschieden wird.

Erfindungsgemäß werden also zur Bestimmung der Sichtweite des Sensors Informationen genutzt, die der Sensor selbst ermitteln kann, d.h. es wird der Umstand ausgenutzt, dass eine den Betrieb des Sensors beeinträchtigende Störung vom Sensor "gesehen" wird. Man macht sich also zunutze, dass der Sensor gerade dazu dient, Informationen über in seinem Sichtbereich befindliche Objekte zu beschaffen, indem von dem Objekt "Störung" reflektierte Strahlung entsprechend ausgewertet wird.

Daher ist es erfindungsgemäß möglich, auf die Sichtweite beeinträchtigende Störungen differenziert zu reagieren. Insbesondere ist es nicht erforderlich, den Erfassungsbetrieb aus Sicherheitsgründen und aufgrund der Befürchtung völlig einzustellen, dass auf die Messungen wegen der Sichtweitenreduzierung kein Verlass mehr sei oder die reduzierte Sichtweite für eine brauchbare Überwachung nicht mehr ausreiche. Vielmehr kann erfindungsgemäß die tatsächliche Reichweite des Sensors z.B. bei Regen ermittelt und beispielsweise die Geschwindigkeit eines mit der Erfassungseinrichtung versehenen Fahrzeugs so weit verringert werden, dass die reduzierte Sensorsichtweite einem ausreichend sicheren Erfassungsbetrieb genügt, d.h. vorausfahrende Fahrzeuge oder Gegenstände auf der Fahrbahn trotz Sichtweitenreduzierung wieder rechtzeitig erkannt werden.

Bei den Störungen, die anhand wenigstens einer charakteristischen Störungseigenschaft erkannt werden, handelt es sich erfindungsgemäß bevorzugt um Nebel, Regen, Schnee, Sand, Staub, Gischt, Abgasen, Sensorverschmutzungen und/oder Sensorbeschädigungen. Durch Auswerten der zumindest von der jeweiligen Störung reflektierten Strahlung kann zwischen den einzelnen Störungen unterschieden werden.

Die Unterscheidung, d.h. das Erkennen einer bestimmten Störung, erfolgt anhand wenigstens einer charakteristischen Eigenschaft der Störung. Als Störungseigenschaften werden bevorzugt die Position, die Kontur, die Form, die Größe, die Ausdehnung, die Entfernung, die Struktur, die Konsistenz, das zeitliche Verhalten, das Reflexionsverhalten und/oder die Umgebung einer Störung verwendet.

Die Erfindung kann dabei vorhandenes, aus Erfahrung gewonnenes Wissen über typische Eigenschaften von Störungen nutzen. So unterscheidet sich z.B. Regen von Gischt dadurch, dass den Regen bildende Tropfen global, d.h. im gesamten Sichtbereich des Sensors vorhanden sind, während das Objekt "Gischt" zum einen räumlich begrenzt ist und zum anderen nur in unmittelbarer Nähe zu einem die Gischt erzeugenden Gegenstand, z.B. einem Fahrzeug bzw. Fahrzeugreifen, auftreten kann, der in der Umgebung der Gischt vom Sensor "gesehen" werden muss, wobei sich der Gegenstand außerdem bewegen muss. Sich gischtartig verhaltende "Gegenstände" an stehenden Fahrzeugen beispielsweise können als Abgaswolken angesehen werden, auch ohne dass die Struktur des "Gegenstands" näher untersucht wird.

Eine Unterscheidung zwischen globalen und räumlich begrenzten Störungen ist bereits deshalb von Bedeutung, da letztere die Sichtweite des Sensors nur in einem begrenzten Winkelbereich beeinträchtigen können und daher außerhalb dieses Winkelbereiches nicht berücksichtigt zu werden brauchen.

Die Erkennung von globalen Störungen, die aus einzelnen Teilchen bestehen, wie z.B. Regen oder Schnee, basiert bevorzugt darauf, dass in einem Nahbereich, z.B. bis in eine Entfernung zum Sensor von etwa 3 m, stochastisch auftretende einzelne Messpunkte ermittelt werden, die über den gesamten vom Sensor erfassten Winkelbereich zumindest näherungsweise gleichverteilt sind.

Räumlich begrenzte oder lokale Störungen wie z.B. Gischt können auch noch in größeren Entfernungen zum Sensor, z.B. bis in eine Entfernung von 15 m, detektiert werden. Ferner kann es sein, dass der Sensor durch eine lokale Gischtwolke gewissermaßen "hindurch sieht", so dass hinter der Gischtwolke befindliche Gegenstände detektiert werden können. Es kann dann berücksichtigt werden, dass die Sichtweite des Sensors lediglich im Bereich der Gischtwolke, d.h. lokal, reduziert ist.

Jeweils globale Störungen können beispielsweise durch ihr zeitliches Verhalten voneinander unterschieden werden. Während z.B. Regen sich durch ein stochastisches Verhalten seiner mittels des Sensors detektierbaren Regentropfen auszeichnet, wird Nebel vom Sensor dadurch erkannt, dass entweder wabernde, wolkenartige Konturen detektiert werden und darin vorübergehend eigentlich interessierende Gegenstände auftauchen können (heterogenes Verhalten von Nebel) oder - insbesondere bei Windstille und bei Nicht-Beeinflussung durch andere, insbesondere bewegte Gegenstände - eine zumindest näherungsweise geschlossene und stationäre "Wand" oder Linie detektiert wird (homogenes Verhalten von Nebel), die jedoch im Vergleich zu der gemessenen Kontur eines tatsächlich interessierenden Gegenstandes, z.B. eines anderen Fahrzeugs, wesentlich unschärfer ist, z.B. um einen Faktor 3 bis 8 (bezogen auf die Standardabweichung bei der Entfernungsbestimmung).

Ferner können erfindungsgemäß Ausschlusskriterien verwendet werden, nach denen bestimmte Störungen, die im Rahmen der jeweiligen Anwendung nicht auftreten können, von vornherein nicht als in Frage kommend angesehen werden. So kann z.B. bei in geschlossenen Räumen erfolgenden Anwendungen das Auftreten von Regen oder von Niederschlägen allgemein ausscheiden.

Gemäß einer bevorzugten Ausführungsform der Erfindung wird vorgeschlagen, dass das Vorliegen von Störungen nur dann erkannt wird, wenn vorgegebene Kombinationen aus jeweils wenigstens zwei verschiedenen charakteristischen Störungseigenschaften identifiziert werden. Hierdurch werden die Anforderungen an eine Störung, als solche erkannt zu werden, erhöht und dadurch die Störungen sicherer identifiziert.

So können z.B. Gischt und Abgase, die sich jeweils durch räumlich begrenztes oder "wolkenförmiges" Auftreten sowie Zugehörigkeit zu einem Fahrzeug auszeichnen, aufgrund ihrer unterschiedlichen Struktur voneinander unterschieden werden. Es kann hierbei z.B. der Umstand ausgenutzt werden, dass zumindest näherungsweise Gischt aus einzeln detektierbaren Wassertropfen besteht und sich daher insoweit regenartig verhält, während Abgase für den Sensor eher wie Nebel "aussehen".

Des weiteren ist erfindungsgemäß bevorzugt vorgesehen, dass die Ermittlung der Störungsstärke und/oder die Bestimmung der momentanen Sichtweite in Abhängigkeit von zumindest einer charakteristischen Störungseigenschaft erfolgt.

Hierbei kann diejenige charakteristische Störungseigenschaft verwendet werden, anhand welcher die Störung überhaupt erkannt wurde. Alternativ oder zusätzlich kann auch wenigstens eine zusätzliche Störungseigenschaft herangezogen werden. So kann beispielsweise zunächst Regen an einem stochastischen Verhalten einzeln detektierbarer, hinsichtlich ihrer Größe mit hinreichender Wahrscheinlichkeit Regentropfen entsprechender Gegenstände erkannt und anschließend die Stärke des Regens z.B. durch Bestimmen der Anzahl von Regentropfen pro Zeit- und Winkeleinheit ermittelt werden.

Ferner kann erfindungsgemäß vorgesehen sein, dass die Störung direkt anhand ihrer charakteristischen Störungseigenschaft erkannt wird. Hierbei kann anhand einer einzigen charakteristischen Störungseigenschaft nicht nur das Vorliegen einer Störung an sich, sondern außerdem erkannt werden, um welche Störung es sich handelt. Dies kommt beispielsweise dann in Frage, wenn bestimmte Mehrdeutigkeiten von vornherein ausgeschlossen sind, z.B. bei in geschlossenen Räumen stattfindenden Anwendungen, in denen keine Niederschläge auftreten können und ein regenartiges Verhalten zeigende Störungen nur von als mögliche Störungen zugelassenen Beregnungsanlagen stammen können.

Gemäß einem weiteren Ausführungsbeispiel der Erfindung wird vorgeschlagen, dass bei Vorliegen einer Störung dieser anhand der charakteristischen Störungseigenschaft wenigstens einer von mehreren vorgegebenen Störungstypen zugeordnet wird, der mehrere verschiedene Störungen umfasst, auf welche die charakteristische Störungseigenschaft zutrifft.

Hierdurch können bestimmte Störungen unter einem gemeinsamen, von dem Störungstyp gebildeten Dach behandelt werden. Dies kann z.B. im Rahmen einer zwar groben, dafür aber schnellen Sichtweitenbestimmung sinnvoll sein. So können beispielsweise verschiedene Arten von Niederschlägen zu einem Störungstyp "Niederschlag" zusammengefasst werden, der sich durch die allen seinen Störungen gemeinsame charakteristische Störungseigenschaft des globalen, nicht räumlich begrenzten Auftretens auszeichnet.

Im Fall der Verwendung von Störungstypen kann vorgesehen sein, dass die Ermittlung der Störungsstärke und/oder die Bestimmung der momentanen Sichtweite in Abhängigkeit von dem Störungstyp erfolgt. Zwischen den einzelnen, einem gemeinsamen Störungstyp angehörenden Störungen wird hierbei folglich nicht mehr unterschieden. Nebel, Regen und Schnee beispielsweise haben dann die Ermittlung derselben reduzierten Sichtweite zur Folge, obwohl die tatsächlichen Sichtweiten unterschiedlich sein können.

Um vorhandenes, aus Erfahrungen gewonnenes Wissen über typische Eigenschaften von Störungen zu nutzen, ist gemäß einer besonders bevorzugten Ausführungsform der Erfindung vorgesehen, dass das Erkennen der Störung, eine Zuordnung eines Störungstyps, die Ermittlung der Störungsstärke und/oder die Bestimmung der momentanen Sichtweite jeweils unter Verwendung von empirisch gewonnenen, in einer Speichereinrichtung der Erfassungseinrichtung in Form wenigstens einer Kalibrier- oder Referenztabelle oder -kurve enthaltenen Erfahrungswerten erfolgt.

Hierbei werden folglich nicht bereits aus der Auswertung der reflektierten Strahlung unmittelbar absolute Feststellungen z.B. über die Störung, einen Störungstyp, die Störungsstärke und/oder die momentane Sichtweite getroffen, sondern die Messwerte werden benutzt, um vorhandene Erfahrungswerte zu ermitteln, welche die gemessene tatsächliche Situation zutreffend beschreiben.

So kann beispielsweise einer Kalibrier- oder Referenztabelle oder -kurve für jede charakteristische Störungseigenschaft eine entsprechende Störung und/oder ein entsprechender Störungstyp entnehmbar sein.

Bevorzugt ist für jeden Störungstyp eine Referenztabelle oder -kurve vorgesehen, der für jede diesen Störungstyp betreffende charakteristische Störungseigenschaft eine entsprechende Störungsstärke entnehmbar ist. So kann beispielsweise die gleiche als charakteristische Störungseigenschaft gemessene Anzahl stochastisch verteilter Gegenstände pro Zeitund Winkeleinheit in Abhängigkeit davon, ob es sich um eine Störung des Typs "global", z.B. um Regen, oder um eine Störung des Typs "räumlich begrenzt", z.B. um Gischt, handelt, verschiedene Störungsstärken und damit insbesondere verschiedene momentane Sichtweiten ergeben.

Ferner ist es bevorzugt, wenn einer Kalibrier- oder Referenztabelle oder -kurve für jede ermittelte Störungsstärke ein entsprechender Wert für die momentane Sichtweite des Sensors entnehmbar ist. Insbesondere ist hierbei für jede Störung und/oder für jeden Störungstyp eine separate Referenz- oder Kalibriertabelle bzw. -kurve vorgesehen.

Die Erfindung ist nicht darauf beschränkt, dass Aussagen bereits aufgrund einer einzigen identifizierten charakteristischen Störungseigenschaft getroffen werden. So kann in einer Ausführungsvariante vorgesehen sein, dass das Erkennen der Störung, eine Zuordnung eines Störungstyps, die Ermittlung der Störungsstärke und/oder die Bestimmung der momentanen Sichtweite anhand verschiedener, jeweils mittels des Sensors durch Auswerten der reflektierten Strahlung identifizierter charakteristischer Störungseigenschaften erfolgt.

Des weiteren ist gemäß einer besonders bevorzugten Ausführungsform der Erfindung vorgesehen, dass im Fall einer erkannten Störung von der charakteristischen Störungseigenschaft, insbesondere von einem Störungstyp, abhängige Maßnahmen zur Abmilderung oder Beseitigung der Störwirkung getroffen werden.

Bei Fahrzeuganwendungen beispielsweise können die Maßnahmen darin bestehen, dass das Vorliegen einer Störung dem Fahrer angezeigt wird, dass bestimmte Fahrzeugeinrichtungen wie z.B. Scheinwerfer, Nebelschlussleuchten oder Scheibenwischer aktiviert werden, dass Reinigungseinrichtungen für den Sensor oder für eine den Sensor zumindest bereichsweise umgebende Schutzabdeckung in Betrieb genommen werden, dass eine derartige Schutzabdeckung in geeigneter Weise in Bewegung gesetzt wird und/oder dass in den Fahrzeugbetrieb eingegriffen wird, indem z.B. die Fahrgeschwindigkeit reduziert oder lediglich eine vorgegebene Höchstgeschwindigkeit zugelassen wird.

Die Lösung der der Erfindung zugrunde liegenden Aufgabe erfolgt außerdem durch die Merkmale des Vorrichtungsanspruchs und insbesondere dadurch, dass eine Erfassungseinrichtung, insbesondere ein Laserscanner, zumindest einen Sensor zur Aussendung von insbesondere gepulster elektromagnetischer Strahlung in einen Überwachungsbereich und zum Empfang von aus dem Überwachungsbereich reflektierter Strahlung sowie eine Auswerteeinrichtung zur Auswertung der reflektierten Strahlung aufweist, wobei die Auswerteeinrichtung zur Durchführung eines erfindungsgemäßen Verfahren ausgebildet ist.

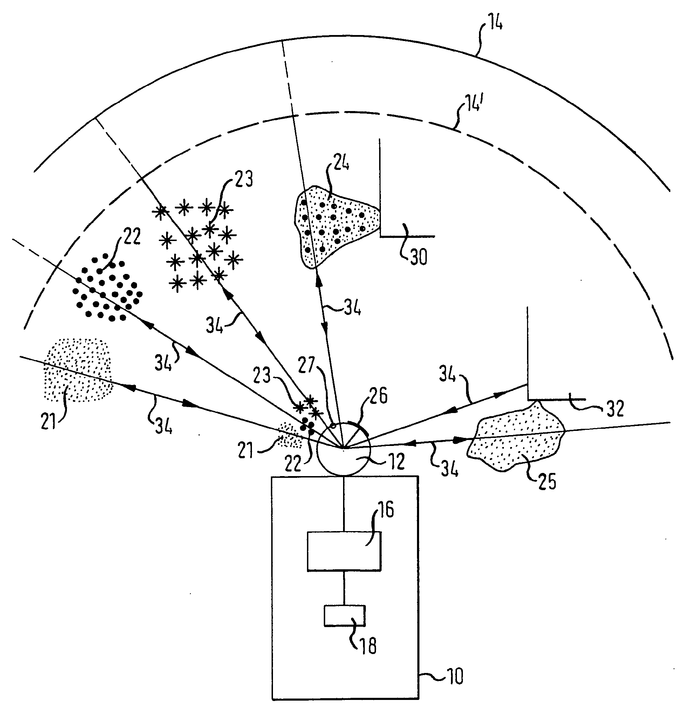

Bevorzugte Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben, deren einzige Figur zur Erläuterung der Erfindung schematisch mehrere mittels eines an einem Fahrzeug angebrachten Laserscanners erkennbare, zu einer Sichtweitenreduzierung führende Störungen zeigt.

Das dargestellte Fahrzeug 10 trägt an seiner Vorderseite als Sensor einen Laserscanner 12, wie er eingangs erläutert wurde und der den in Fahrtrichtung vor dem Fahrzeug 10 liegenden Überwachungsbereich in zumindest einer z.B. horizontalen Abtastebene mit Strahlungspulsen 34 abtastet. Dem Sensor 12 ist eine Auswerteeinrichtung 16 zur Auswertung der aus dem Überwachungsbereich reflektierten Strahlung mittels entsprechender Algorithmen sowie eine Speichereinrichtung 18 zugeordnet, in der Kalibriertabellen abgelegt sind, auf die an anderer Stelle näher eingegangen wird.

Die normale, ungestörte Sichtweite 14 des Sensors 12 ist durch einen Teilkreis angedeutet. Insbesondere wegen der Aufweitung der Abtaststrahlung 34 ist die Intensität der von außerhalb der Sichtweite 14 liegenden Gegenständen zumindest bei Annahme normaler Reflektivitätseigenschaften reflektierten Strahlung nicht mehr in der Lage, eine vorgegebene Schwelle einer Empfangseinheit des Sensors 12 zu übersteigen.

Die Sichtweite oder Reichweite des Sensors 12 wird durch Störungen 21-27, auf die im folgenden näher eingegangen wird, auf einen Wert reduziert, der durch einen weiteren, vereinfachend für die Störungen 21-25 gleichen Teilkreis 14' angedeutet ist. Tatsächlich ist die störungsbedingt reduzierte Sichtweite 14' von der Art der Störung 21-27 sowie von der Störungsstärke abhängig.

Bei den beispielhaft dargestellten Störungen handelt es sich zum einem um Nebel 21, Regen 22 und Schnee 23. Diesen Störungen, denen z.B. ein gemeinsamer Störungstyp "Niederschlag" oder "global" zugeordnet werden kann, ist gemeinsam, dass sie im gesamten Sichtbereich des Sensors 12 vorhanden sind, was in der Figur jeweils durch eine sowohl im Nahbereich als auch in einem weiter entfernt liegenden Bereich angeordnete Symbolik angedeutet ist.

Ferner können Störungen des Typs "lokal" auftreten, von denen in der Figur zum einen Gischt 24, die von einem vorausfahrenden Fahrzeug 30 hervorgerufen wird, und zum anderen Abgase 25 dargestellt sind, die von einem weiteren Fahrzeug 32 im Sichtbereich des Sensors 12 stammen.

Des weiteren kann die Sichtweite des Sensors 12 durch Verschmutzungen 26 oder Beschädigungen 27 des Sensors 12, z.B. eines Strahlungsaustrittsfensters oder einer den Sensor 12 umgebenden Schutzabdeckung, reduziert werden. Diesen Störungen 26, 27 kann z.B. der Störungstyp "am Sensor" zugeordnet werden.

Eine Verschmutzung kann z.B. dann, wenn sie in Form einer auf dem Sensor 12 liegenden Staubschicht vorliegt, den gesamten Sichtbereich betreffen. In der Figur sind lediglich lokale Sensorstörungen angedeutet, und zwar zum einen eine ausgedehnte Verschmutzung 26 z.B. in Form von auf den Sensor 12 geschleudertem Dreck oder Matsch und zum anderen eine punktuelle Beschädigung 27 z.B. in Form eines steinschlagbedingten Sprunges oder Risses im Austrittsfensters oder in einer Schutzabdeckung des Sensors 12.

Die Sensorstörungen 26, 27 sind jeweils von einem Ausmaß derart, dass in den betroffenen Winkelbereichen die ausgesandte Strahlung den Sensor 12 nicht oder zumindest nicht als für eine Abtastung brauchbarer Strahl verlassen kann, so dass hier folglich die Sichtweite des Sensors 12 auf Null reduziert ist.

In einem Ausführungsbeispiel der Erfindung wird zunächst das Vorliegen der Störung "Regen" 22 anhand von charakteristischen Eigenschaften erkannt, nämlich daran, dass zum einen insbesondere im Nahbereich eine Vielzahl von zeitlich stochastisch verteilt auftretenden Rohdatenmesswerten, denen jeweils ein Abstand und ein Winkelwert, d.h. eine Richtung, zugeordnet ist, dadurch detektiert wird, dass die zumindest im Nahbereich noch vergleichsweise wenig aufgeweiteten Abtaststrahlen 34 an einzelnen Regentropfen reflektiert und nachgewiesen werden, und zum anderen sich über den gesamten Winkelbereich des Sensors 12 das gleiche Bild ergibt, d.h. die Störung als global erkannt wird.

Zusätzlich zu diesen beiden Störungseigenschaften "stochastisches Verhalten" und "global" kann - eine entsprechende Ausgestaltung des Sensors bzw. der Auswerteeinrichtung vorausgesetzt - als dritte Eigenschaft die "Teilchengröße" berücksichtigt werden, indem die Größe der die Strahlung reflektierenden "Gegenstände" bestimmt wird. Dies kann z.B. durch zusätzliche Berücksichtigung der Intensität der reflektierten Strahlung erfolgen. Einer in der Speichereinrichtung 18 abgelegten Kalibriertabelle, die aus Erfahrungswerten z.B. im Rahmen einer vor der Erstinbetriebnahme durchgeführten Kalibrierung gewonnen wurde, wird anschließend für die ermittelte Teilchengröße die Information entnommen, ob es sich bei den Teilchen um Regentropfen oder um Schneeflocken handelt. Auf diese Weise kann die tatsächlich vorliegende Störung "Regen" 22 von der allein aufgrund der beiden Störungseigenschaften "stochastisches Verhalten" und "global" ununterscheidbaren Störung "Schnee" 23 unterschieden werden.

Anschließend wird die Stärke des Regens 22 bestimmt, indem durch Auswerten der reflektierten Strahlung als weitere charakteristische Störungseigenschaft ein Wert für die Anzahl von Regentropfen pro Zeit- und Winkeleinheit bestimmt wird. Einer weiteren, in der Speichereinrichtung 18 abgelegten Kalibriertabelle wird daraufhin für die auf diese Weise ermittelte Störungsstärke ein entsprechender Wert für die momentane Sichtweite 14' des Sensors 12 entnommen, auf welche die normale, ungestörte Sichtweite 14 durch den Regen 22 reduziert ist.

Da in diesem Beispiel das zeitliche Verhalten der Störung "Regen" eine Rolle spielt, werden hier für die Sichtweitenbestimmung mehrere zeitlich aufeinanderfolgende Abtastungen des Sichtbereiches herangezogen. Erfindungsgemäß kommen grundsätzlich auch solche charakteristischen Störungseigenschaften für die Sichtweitenbestimmung in Frage, die bereits nach einer einzigen Abtastung des Sichtbereiches identifiziert werden können.

In einem alternativen Ausführungsbeispiel wird zunächst lediglich anhand der beiden ersten vorstehend genannten charakteristischen Störungseigenschaften "stochastisches Verhalten" und "global" das Vorliegen eines Störungstyps "Niederschlag" erkannt, ohne dass zwischen den Störungen "Regen" und "Schnee", denen dieser Störungstyp zugeordnet ist, unterschieden wird.

Entsprechend dem ersten Ausführungsbeispiel wird dann wiederum die Anzahl von Teilchen pro Zeit- und Winkeleinheit bestimmt und für diesen Wert einer alleine dem Störungstyp "Niederschlag" zugeordneten Kalibriertabelle direkt ein Wert für die momentane Sichtweite 14' des Sensors 12 entnommen, wobei diese Kalibriertabelle Wissen bzw. Erfahrungswerte bezüglich mehrerer verschiedener Niederschlagsarten enthält.

Im Vergleich zum ersten Ausführungsbeispiel wird hier also "gröber" gearbeitet, indem auf die zusätzliche Bestimmung der Teilchengröße zur Unterscheidung zwischen verschiedenen Niederschlagsarten verzichtet wird.

Einige Beispiele für Möglichkeiten, unter Verwendung von Wissen über das typische Verhalten bestimmter Störungen diese voneinander zu unterscheiden, wurden in den vorstehenden Ausführungsbeispielen sowie im Einleitungsteil bereits vorgestellt.

Als weitere Möglichkeit sei beispielsweise erwähnt, dass das Vorliegen insbesondere globaler Störungen wie z.B. Nebel oder Niederschlag auch dadurch erkannt werden kann, dass Inhomogenitäten im Sichtbereich, die nicht eigentlich interessierende Gegenstände wie z.B. andere Verkehrsteilnehmer darstellen, detektiert werden, wie sie z.B. von Verwirbelungen gebildet werden, die an sich durch Nebel oder Regen hindurch bewegten Fahrzeugen entstehen. Dabei kann die Detektion eines bewegten Fahrzeugs die Annahme, dass Nebel oder Niederschlag vorliegt, stützen.

Ferner können räumlich begrenzte Störungen wie z.B. Gischt 24 oder Abgase 25 von "echten" Gegenständen wie z.B. Fahrzeugen oder Personen durch die vergleichsweise starken statistischen Schwankungen ihrer Form, Kontur oder Ausdehnung unterschieden werden.

Sich hinsichtlich anderer charakteristischer Störungseigenschaften gischt- oder abgasartig verhaltende Störungen können des weiteren z.B. dadurch erkannt werden, dass zugehörige, in unmittelbarer Nähe erwartete Gegenstände wie insbesondere Fahrzeuge fehlen. Eine Fehlinterpretation eines auf die Fahrbahn gewehten Strauches oder Busches, der allenfalls nur eine kurzfristige Beeinträchtigung der Sensorsichtweite bedeutet, als Gischt oder Abgaswolke wird hierdurch vermieden.

Eine weitere Störungseigenschaft kann ferner die Entfernung sein, in welcher die Störung detektiert wird. Globale Störungen wie z.B. Nebel oder Niederschläge, welche nicht in unmittelbarem Zusammenhang mit der Funktionsfähigkeit des Sensors 12 stehen, können dadurch erkannt werden, dass sie im Nahbereich des Sensors 12, d.h. in Ausbreitungsrichtung der Strahlung unmittelbar vor dem Sensor 12, erfasst werden.

Gischt 24 und Abgase 25 können außerdem z.B. wegen ihrer unterschiedlichen Struktur oder Konsistenz voneinander unterschieden werden, da Gischt 24 - wie in der Figur angedeutet - zumindest teilweise Teilchen mit einer Größe z.B. von Regentropfen umfasst, wie sie in Abgaswolken nicht vorkommen.

Des weiteren zeichnen sich Verschmutzungen 26 oder Beschädigungen 27 des Sensors 12 dadurch aus, dass sie sich im sogenannten Ultranah-Bereich des Sensors 12 befinden.

Derartige Störungen 26, 27 können außerdem dadurch erkannt werden, dass innerhalb des Sensors 12 die von der Verschmutzung 26 oder Beschädigung 27 in den Sensor 12 zurückreflektierte Strahlung detektiert wird. Während der Nachweis derartiger, eine vorgegebene Intensitätsschwelle übersteigender Innenreflexionen an sich auf das Vorliegen derartiger Störungen hindeuten kann, ist es möglich, anhand der Höhe der zurückreflektierten Strahlungsintensität Feststellungen über die Art oder den Typ der Beschädigung oder Verschmutzung zu treffen.

Ferner können im Ultranah-Bereich oder im Nahbereich befindliche Störungen dann, wenn sich im Nahbereich außerdem "echte" Gegenstände wie z.B. andere Verkehrsteilnehmer befinden, auch dadurch erkannt werden, dass mit dem Sensor 12 sogenannte Abrißkanten oder Mischentfernungen gemessen werden. Derartige "Geistermessungen", die keinem tatsächlich in der gemessenen Entfernung befindlichen Gegenstand entsprechen, sind eine Folge der Länge der ausgesandten Laserpulse. Die Detektion "scheinbarer" Messpunkte zwischen dem Sensor 12 und einem nahen, als tatsächlich vorhandener Gegenstand angesehenen Objekt kann somit als ein Hinweis auf das Vorliegen einer Verschmutzung 26 oder Beschädigung 27 des Sensors 12 gewertet werden.

Störungen können "echte" Gegenstände teilweise verdecken, was eine Objekterkennung, in deren Rahmen das erfindungsgemäße Verfahren durchgeführt wird, beeinträchtigen kann. Erfindungsgemäß kann vorgesehen sein, dass im Fall derartiger, störungsbedingter Verdeckungen diese als solche erkannt und bei einer im Rahmen der Objekterkennung durchgeführten Verdeckungserkennung berücksichtigt werden.

### Bezugszeichenliste

- 10: Fahrzeug
- 12: Sensor, Laserscanner
- 14: Sichtweite
- 14': reduzierte Sichtweite
- 16: Auswerteeinrichtung
- 18: Speichereinrichtung
- 21: Nebel
- 22: Regen
- 23: Schnee
- 24: Gischt
- 25: Abgaswolke
- 26: Sensorverschmutzung
- 27: Sensorbeschädigung
- 30: weiteres Fahrzeug
- 32: weiteres Fahrzeug
- 34: Strahlungspuls, Abtaststrahl

## Patentansprüche

1. Verfahren zum Bestimmen der Sichtweite einer bevorzugt optoelektronischen, insbesondere an einem Fahrzeug (10) angebrachten Erfassungseinrichtung, insbesondere eines Laserscanners, die zumindest einen Sensor (12) zur Aussendung von insbesondere gepulster elektromagnetischer Strahlung in einen Überwachungsbereich und zum Empfang von aus dem Überwachungsbereich reflektierter Strahlung sowie eine Auswerteeinrichtung (16) zur Auswertung der reflektierten Strahlung umfasst, bei dem
- während des Betriebs des Sensors (12) das Vorliegen wenigstens einer im Sichtbereich des Sensors (12) liegenden, die Sichtweite (14) zumindest bereichsweise beeinträchtigenden Störung (21-27) anhand wenigstens einer charakteristischen Störungseigenschaft erkannt wird, die mittels des Sensors (12) durch Auswerten der reflektierten Strahlung identifizierbar ist,
- aus reflektierter Strahlung, die zumindest die aus dem Störbereich stammende Störstrahlung umfasst, die Stärke der Störung (21-27) ermittelt wird, und
- aus der Störungsstärke die momentane Sichtweite (14') des Sensors (12) bestimmt wird.

2. Verfahren nach Anspruch 1,
**dadurch gekennzeichnet,**
**dass** anhand charakteristischer Störungseigenschaften zwischen Störungen aufgrund von Nebel (21), Regen (22), Schnee (23), Sand, Staub, Gischt (24), Abgasen (25), Sensorverschmutzungen (26) und/oder Sensorbeschädigungen (27) unterschieden wird.

3. Verfahren nach Anspruch 1 oder 2,
**dadurch gekennzeichnet,**
**dass** als charakteristische Störungseigenschaft die Position, die Kontur, die Form, die Größe, die Ausdehnung, die Entfernung, die Struktur, das zeitliche Verhalten, das Reflexionsverhalten und/oder die Umgebung einer Störung (21-27) verwendet wird.

4. Verfahren nach einem der vorhergehenden Ansprüche,
**dadurch gekennzeichnet,**
**dass** das Vorliegen von Störungen (21-27) nur dann erkannt wird, wenn vorgegebene Kombinationen aus jeweils wenigstens zwei verschiedenen charakteristischen Störungseigenschaften identifiziert werden.

5. Verfahren nach einem der vorhergehenden Ansprüche,
**dadurch gekennzeichnet ,**
**dass** die Ermittlung der Störungsstärke und/oder die Bestimmung der momentanen Sichtweite (14') in Abhängigkeit von zumindest einer charakteristischen Störungseigenschaft erfolgt.

6. Verfahren nach einem der vorhergehenden Ansprüche,
**dadurch gekennzeichnet ,**
**dass** anhand der charakteristischen Störungseigenschaft direkt die Störung (21-27) erkannt wird.

7. Verfahren nach einem der Ansprüche 1 bis 5,
**dadurch gekennzeichnet,**
**dass** bei Vorliegen einer Störung (21-27) dieser anhand der charakteristischen Störungseigenschaft wenigstens einer von mehreren vorgegebenen Störungstypen zugeordnet wird, der mehrere verschiedene Störungen umfasst, auf welche die charakteristische Störungseigenschaft zutrifft.

8. Verfahren nach Anspruch 7,
**dadurch gekennzeichnet,**
**dass** die Ermittlung der Störungsstärke und/oder die Bestimmung der momentanen Sichtweite (14') in Abhängigkeit von dem Störungstyp erfolgt.

9. Verfahren nach einem der vorhergehenden Ansprüche,
**dadurch gekennzeichnet,**
**dass** das Erkennen der Störung (21-27), eine Zuordnung eines Störungstyps, die Ermittlung der Störungsstärke und/oder die Bestimmung der momentanen Sichtweite (14') jeweils unter Verwendung von empirisch gewonnenen, in einer Speichereinrichtung (18) der Erfassungseinrichtung in Form wenigstens einer Referenztabelle oder -kurve enthaltenen Erfahrungswerten erfolgt.

10. Verfahren nach Anspruch 9,
**dadurch gekennzeichnet,**
**dass** einer Referenztabelle oder -kurve für jede charakteristische Störungseigenschaft eine entsprechende Störung (21-27) und/oder ein entsprechender Störungstyp entnehmbar ist, der mehrere verschiedene Störungen umfasst, auf welche die charakteristische Störungseigenschaft zutrifft.

11. Verfahren nach einem der Ansprüche 7 bis 10,
**dadurch gekennzeichnet,**
**dass** für jeden Störungstyp eine Referenztabelle oder -kurve vorgesehen ist, der für jede diesen Störungstyp betreffende charakteristische Störungseigenschaft eine entsprechende Störungsstärke entnehmbar ist.

12. Verfahren nach einem der Ansprüche 9 bis 11,
**dadurch gekennzeichnet,**
**dass** einer insbesondere von der jeweiligen Störung und/oder von einem Störungstyp abhängigen Referenztabelle oder -kurve für jede ermittelte Störungsstärke ein entsprechender Wert für die momentane Sichtweite (14') des Sensors (12) entnehmbar ist.

13. Verfahren nach einem der vorhergehenden Ansprüche,
**dadurch gekennzeichnet,**
**dass** das Erkennen der Störung (21-27), eine Zuordnung eines Störungstyps, die Ermittlung der Störungsstärke und/oder die Bestimmung der momentanen Sichtweite (14') anhand verschiedener, jeweils mittels des Sensors (12) durch Auswerten der reflektierten Strahlung identifizierter charakteristischer Störungseigenschaften erfolgt.

14. Verfahren nach einem der vorhergehenden Ansprüche,
**dadurch gekennzeichnet,**
**dass** im Fall einer erkannten Störung (21-27) von der charakteristischen Störungseigenschaft, insbesondere von einem Störungstyp, abhängige Maßnahmen zur Abmilderung oder Beseitigung der Störwirkung getroffen werden.

15. Erfassungseinrichtung, insbesondere Laserscanner, mit zumindest einem Sensor (12) zur Aussendung von insbesondere gepulster elektromagnetischer Strahlung in einen Überwachungsbereich und zum Empfang von aus dem Überwachungsbereich reflektierter Strahlung, und mit einer Auswerteeinrichtung (16) zur Auswertung der reflektierten Strahlung, wobei die Auswerteeinrichtung (16) zur Durchführung eines Verfahrens nach einem der vorhergehenden Ansprüche ausgebildet ist.
